(19) Europäisches Patentamt
European Patent Office
Office européen des brevets

(11) **EP 2 328 311 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(51) Int Cl.:
*H04L 25/02* *(2006.01)*  *H04L 27/26* *(2006.01)*

(21) Anmeldenummer: **10015152.1**

(22) Anmeldetag: **30.11.2010**

(54) **Verfahren und System zum Schätzen von Echos**

Method and system for estimating echoes

Procédé et système pour l'éstimation d'échos

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2009 ES 200902279**

(43) Veröffentlichungstag der Anmeldung:
**01.06.2011 Patentblatt 2011/22**

(73) Patentinhaber: **Sistemas Integrados de Servicios de Telecontrol, S.L.**
**15706 Santiago de Compostela (ES)**

(72) Erfinder:
- **Ledo Gaviero, José Luis**
  **15706 Santiago de Compostela (ES)**
- **Paz Bugallo, Benito Manuel**
  **15706 Santiago de Compostela (ES)**
- **Ucha Cuevas, Miguel Angel**
  **15706 Santiago de Compostela (ES)**

(74) Vertreter: **Dosterschill, Peter**
**Dosterschill & Kollegen**
**Fichtenstrasse 11**
**85570 Ottenhofen (DE)**

(56) Entgegenhaltungen:
**JP-A- 2009 239 345**

- **BOUZEGZI A ET AL: "New algorithms for blind recognition of OFDM based systems", SIGNAL PROCESSING, ELSEVIER SCIENCE PUBLISHERS B.V. AMSTERDAM, NL, Bd. 90, Nr. 3, 23. September 2009 (2009-09-23), Seiten 900-913, XP026748118, ISSN: 0165-1684, DOI: 10.1016/J.SIGPRO.2009.09.017 [gefunden am 2009-09-23]**
- **NZEZA C N ET AL: "Dynamic spectral monitoring for flexible and reconfigurable railways communication systems", INTELLIGENT TRANSPORT SYSTEMS TELECOMMUNICATIONS,(ITST),2009 9TH INTERNATIONAL CONFERENCE ON, IEEE, PISCATAWAY, NJ, USA, 20. Oktober 2009 (2009-10-20), Seiten 228-233, XP031619184, ISBN: 978-1-4244-5346-7**

**Beschreibung**

Technisches Gebiet

Diese Erfindung betrifft ein Verfahren und ein System zum Schätzen von Echos eines Kommunikationskanals, wobei digitale Signale verwendet werden, nach den Ansprüchen 1 und 9.

Stand der Technik

In allen digitalen Kommunikationssystemen ist die Kenntnis des Kanalzustandes entscheidend für den Erfolg der Übertragungen. Das Informationssignal erreicht den Empfänger über einen oder mehrere Ausbreitungswege, je nach den Eigenschaften des Kanals. Bei Kommunikationen über Satelliten gibt es üblicherweise einen einzigen Ausbreitungsweg zwischen Satellit und Empfänger. In terrestrischen Kommunikationssystemen wird häufiger das Signal an den Empfänger über mehrere Pfade geleitet, was unter dem Begriff "Mehrweg" bekannt ist. Ein Problem bei "Mehrweg-Kommunikation" besteht darin, dass die unterschiedlichen Ausbreitungswege unterschiedliche Längen haben können und somit an den Empfänger dasselbe Signal ankommt, aber mit unterschiedlichen Zeitverschiebungen. Dies führt zu erheblichen Verluste in der Effizienz der Übertragungen, weil damit die so genannte "Intersymbolinterferenz" erzeugt wird. Kommunikationssysteme, die auf der Basis von OFDM arbeiten, berücksichtigen die Möglichkeit, diesem Phänomen entgegenzuwirken, indem in das Signal selbst ein "Guard-Intervall" (Intervall (IG) für die Zusammenführung von Nachrichtenteilen) eingefügt wird. Dieser Schutzmechanismus ermöglicht es, die Kanäle effizient zu handhaben, wobei die maximale Verzögerung des Echos nicht die Länge des Guard-Intervalls überschreitet. Zur Abschätzung der Kommunikationskanäle werden Pilot-Signale in die eigentliche Modulation eingefügt, welche dem Empfänger bekannt sind, und die helfen, den Kanal zu bewerten. Bei den OFDM-Modulationen werden die Pilot-Signale im Frequenzbereich eingefügt. Bei anderen digitalen Modulationen werden die Pilot-Signale im Zeitbereich eingefügt und mit den eigentlichen Daten gemultiplext. Unabhängig von der verwendeten Modulation und dem Muster der verwendeten Pilot-Signale, wird bei den Verfahren zur Schätzen der Kanäle das empfangene Signal demoduliert. Ein solches Verfahren ist auch aus JP 2009 239345 A bekannt.
Der Nachteil eines solchen dieses Verfahrens besteht darin, dass, wenn die Kanal-Zustände sehr schlecht sind, entweder wegen des Geräuschpegels in dem Kanal oder wenn die Kanal-Echos zu viel Störungen zwischen Symbolen erzeugt, es nicht möglich ist, den Kommunikationskanal zu bewerten/schätzen, da der Empfänger den Kanal nicht demodulieren kann.
Der Vorteil der vorliegenden Erfindung im Vergleich zu anderen Verfahren besteht darin, dass es nicht notwendig ist, das Signal zu demodulieren und es benötigt keinen Typ von Pilotsignal, um die Echos des Kanals zu bewerten.
Es existieren weitere Verfahren zur Bewertung der Kanalechos, basierend auf adaptiven Filteralgorithmen, wie im Patent ES2247916A1 mit dem Titel "Verfahren und Vorrichtung zur Echounterdrückung" beschrieben. Der Unterschied zwischen der vorliegenden Erfindung und dem genannten Patent besteht darin, dass das Verfahren zur Bewertung der Echos vollkommen unterschiedlich ist. Die vorliegende Erfindung verwendet keinerlei adaptive Filterung, um ihre Aufgabe zu erfüllen.
OFDM-Signale haben eine Reihe konfigurierbarer Parameter, um den Bedürfnissen des Kanals zu entsprechen. So ist es möglich, die Bandbreite des Signals, die Dauer des Guard-Intervalls und die Anzahl der Träger anzupassen. Die verwendeten Verfahren, um diese Parameter zu bestimmen und dann anschließend das Signal zu demodulieren, beruhen auf einer Autokorrelation des empfangenen Signals in zeitlich begrenzten Positionen, die der möglichen Dauer eines Symbols und der Guard- bzw. Schutzintervalle entsprechen.
Es gibt andere Verfahren der Parameterschätzung in OFDM wie im Patent EP2034685A1 mit dem Titel "Verfahren zur blinden Abschätzung der OFDM-Modulation Parameter", wobei Statistiken vierter Ordnung des OFDM-Signals verwendet werden.
Das Verfahren gemäß der vorliegenden Erfindung nutzt die Berechnungen für das Schätzen des Echos des Kanals, um die Parameter des OFDM-Signal-Modulation zu erhalten. herauszufinden. Bei Verwendung eines digitalen Signals für das Schätzen der Kanalechos, wobei keine OFDM-Modulation vorliegt, ist der zweite Teil der Erfindung nicht anwendbar.

Beschreibung der Erfindung

Die vorliegende Erfindung beschreibt ein Verfahren zur Gewinnung der Echos des Kommunikationskanals zwischen einem Sender bzw. zwischen Sendern und einem Empfänger, sowie zur Gewinnung der Modulationsparameter, die in OFDM-Modulation verwendet werden, ohne die Notwendigkeit der Demodulation des empfangenen Signals und unabhängig von der digitalen Modulation, die im System verwendet wird. Wenn dagegen OFDM-Modulation nicht verwendet wird, ist der Teil der vorliegenden Erfindung, die sich auf OFDM-Parameter bezieht, nicht anwendbar.

Der Funkkanal in einem Kommunikationssystem kann (ohne den Einfluss von Geräusch) beschrieben werden, als

$$h(t) = \sum_{k=0}^{N-1} \beta(k)\delta(t - \tau_k)$$

wobei $\delta(t - \tau_k)$ der Strahl k ist, der den Empfänger mit einer Verzögerung von $\tau_k$ Sekunden bezüglich des Strahls k=0 erreicht, wobei wir davon ausgehen, dass dieser mit $\tau_0 = 0$ ankommt und dass β(k) seine Amplitude ist.
So sehen wir, dass die Informationen am Empfänger über eine Reihe unterschiedlicher Wege mit unterschiedlichen Verstärkungen und Phasen eintreffen. Auf diese Weise kann man Kanäle vom Typus Rice unterscheiden, wo es einen Hauptweg (k = 0) gibt, in dem die Amplitude des empfangenen Signals deutlich höher als die Amplitude der anderen ist, oder Kanäle von Typus Rayleigh, wo die Amplitude des empfangenen Signals auf allen Wegen vergleichbar ist. Der erste Fall entspricht einem Szenario, in dem der Empfänger durch einen direkten Strahl erreicht wird und durch mehrere Strahlen geringerer Amplitude, erzeugt durch Reflexionen oder Brechungen, verursacht durch Umgebungselemente. Im Falle der Rayleigh-Kanäle werden alle Strahlen, die den Empfänger erreichen, reflektiert oder erzeugt durch Beugungsmechanismen in den Umgebungselementen, wobei kein direkter Strahl zwischen Sender und Empfänger existiert.
Betrachten wir den Fall, bei dem wir einen Hauptstrahl und N-1-Sekundärstrahlen haben, d.h. wir haben ein Rice-Typ-Kanal. Wenn wir die Amplitude der Strahlen normieren auf die Amplitude der Strahlen, haben wir:

$$h(t) = 1 + \sum_{k=1}^{N-1} \alpha(k)\delta(t - \tau_k)$$

(Gleichung 1)

Die Frequenzantwort des Kanals ergibt sich zu:

$$H(\omega) = 1 + \sum_{k} \alpha(k)e^{j\omega\tau_k} , k \neq 0$$

wobei wir, ohne Mangel der Allgemeinheit, den Parameter N entfernt haben.
Das quadratische Kanalmodul im Frequenzbereich ergibt sich zu:

$$|H(\omega)|^2 = \left| 1 + \sum_{k} \alpha(k)e^{j\omega\tau_k} \right|^2$$

$$= \left( 1 + \sum_{k} \alpha(k)\cos(\omega\tau_k) \right)^2 + \left( \sum_{k} \alpha(k)\operatorname{sen}(\omega\tau_k) \right)^2$$

$$= 1 + \sum_{k} \alpha^2(k)\cos^2(\omega\tau_k) + 2\sum_{k}\sum_{j} \alpha(k)\alpha(j)\cos(\omega\tau_k)\cos(\omega\tau_j)$$

$$+ \sum_{k} \alpha^2(k)\operatorname{sen}^2(\omega\tau_k) + 2\sum_{k}\sum_{j} \alpha(k)\alpha(j)\operatorname{sen}(\omega\tau_k)\operatorname{sen}(\omega\tau_j) \quad \forall k \neq j, k \neq 0, j \neq 0$$

Bei Anwendung trigonometrischer Beziehungen ergibt sich:

$$|H(\omega)|^2 = 1 + \sum_k \alpha^2(k) + 2\sum_k\sum_j \alpha(k)\alpha(j)\cos\big(\omega(\tau_k - \tau_j)\big) + 2\sum_k \alpha(k)\cos(\omega\tau_k)\,, \forall k \neq j, k \neq 0$$

(Gleichung 2)

Bei Anwendung der Inversen Fouriertransformierten (IFT) auf die vorstehende Gleichung ergibt sich:

$$h_e(t) = c_0\delta(t) + \sum_k\sum_j c_{kj}\delta\big(t - |\tau_k - \tau_j|\big) + \sum_k c_k\delta\big(t - [\![|\tau|]\!]_k[\!]\big)$$

$$\forall t \geq 0, \forall k \neq j, k \neq 0, j \neq 0$$

(Gleichung 3)

wobei

- $h_e(t)$ die erhaltene Schätzantwort ist

- $c_0 = 1 + \sum_k \alpha^2(k)$ der Pegel des Hauptstrahls mit dem Beitrag der übrigen Strahlen,.

- $c_{kj} = 2\alpha(k)\alpha(j)$ der Pegel der Replik, gebildet durch die Strahlen k und j.

- $c_k = 2\alpha(k)$ der Pegel des Strahls k.

Analysiert man die Gleichung 3, lässt sich unterscheiden:

- Bei $t = 0$ die Komponente des Hauptstrahls und eines Beitrags der Amplitude der übrigen Strahlen, die die Kanalantwort bilden.

- Bei $t = |\tau_k - \tau_j|$ die Replik aufgrund der Strahlen k und j.

- Bei $t = |\tau_k|$ der Einfluss des Strahls k.

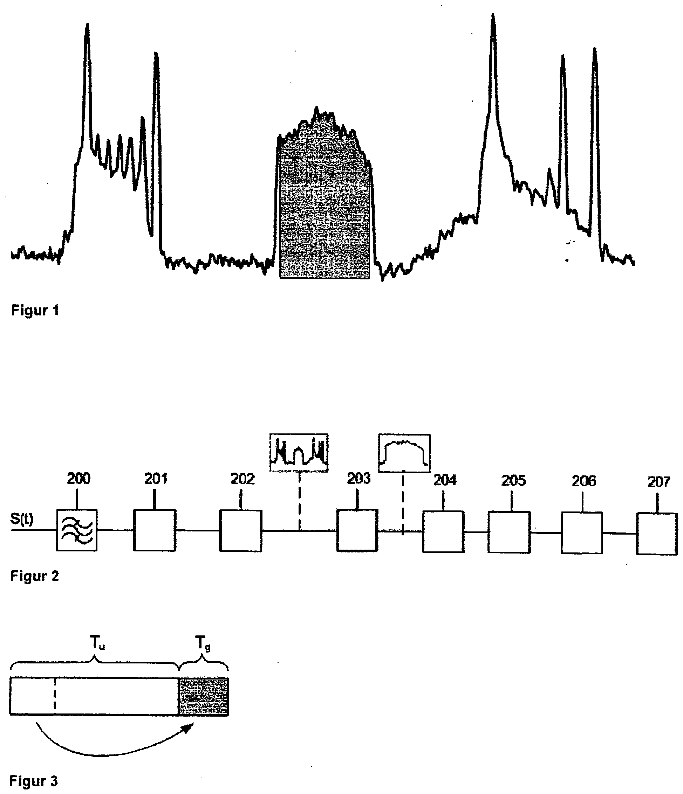

Um die Kanalantwort mit dem geringsten möglichen Einfluss des übertragenen Signals zu erhalten, verwenden wir als Teil des Spektrums denjenigen Teil, der der ebenen Fläche der digitalen Kanäle von DVB-T/T2, DVB-C/C2, DVB-S/S2 oder jedem anderen Typ von Modulation entspricht, die eine ebene Fläche besitzt, die, wie in Abbildung 1 dargestellt, mit der schraffierten (Schatten-)Fläche markiert ist.

Sobald die Zeitantwort des Kanals über die IFFT erhalten ist, sind die Repliken zu eliminieren, die in den Positionen erscheinen aufgrund der Produkte der Cosinus, wie in den obigen Gleichungen dargestellt. Dies kann durch einen iterativen Suchalgorithmus geschehen, sobald die Position der Maxima und deren Pegel erkannt ist.

Hierzu folgen wir dem folgenden Verfahren:

1. Berechnen der Kanal-Zeitantwort, so wie in den obigen Gleichungen beschrieben;

2. Normieren der erhaltenen Antwort, um den maximalen Wert zu kennen;
Dies kann in logarithmischen Einheiten durchgeführt werden, um Operationen zu erleichtern.

3. Die Zahl der erkannten Maxima zählen und ihre Positionen und Werte feststellen;

4. Durch die Liste der Maxima gehen und sie als Strahlen oder Repliken klassifizieren, mit Unterstützung ihrer Positionen und Werte;

4. Korrigieren der Amplituden der Maxima, die als Strahlen klassifiziert sind, nach Gleichung 3.

Das oben beschriebene Verfahren ist nicht erschöpfend und kann durch ein irgendein anderes Verfahren ersetzt werden, das dasselbe Ziel hat, die Strahlen der Repliken zu unterscheiden und ihren korrekten Pegel zu erhalten.

Eine unmittelbare Anwendung, die sich aus diesem Verfahren ableiten lässt, ist die Art der Übertragung, die Bandbreite des Signals und das Guard-Intervall der digitalen Signale, die Schemata der OFDM-Modulation benutzen und ein Guard-Intervall haben, um dem Mehrweg-Phänomen entgegenzuwirken. Dies ist der Fall der DVB-T/T2 Signale, 802.16 (WiMAX), DVB-C2, 802.11n (WIFI), LTE und viele mehr, da diese Art der Modulation zunehmend verwendet wird. Bei dieser Art der Modulation wird das Signal segmentiert in Symbole der Dauer $T_u$. Am Ende eines jeden Symbols fügt man ein Guard-Intervall der Dauer $T_g$ an, womit sich die finale Dauer des Symbols zu $T_s = T_u + T_g$ ergibt. Das Guard-Intervall ist nur eine Wiederholung des Teils der Information des eigentlichen Symbols der Dauer $T_u$, das man an das Ende eines jeden Symbols anfügt, so wie dies in Figur 3 dargestellt ist. So wird $T_g$ definiert als ein Bruchteil von $T_u$. In Tabelle 1 sind beispielhaft Guard-Intervalle dargstellt, die in dem Standard DVB-T für eine Bandbreite eines 8 MHz-Signals verwendet werden, in Abhängigkeit von den Arten der Übertragung. Diese Parameter sind unterschiedlich für die Bandbreiten von 7 MHz und 6 MHz. Um diese Parameter, die charakteristisch für die Schemata der Modulationen basierend auf OFDM, zu ermitteln, geht man von Basis aus, dass man vorab die möglichen Werte der Parameter $T_u$ y $T_g$ kennt. Man wendet das Verfahren, das zuvor erläutert wurde, an, um die Antwort des Kanals zu erhalten, wie in Gleichung 3 ausgedrückt. Wir nehmen an, dass gilt: $T_u \in (T_u^1, T_u^2, \cdots, T_u^K), \forall K$ , wobei K nicht erschöpfend ist.

Auf diese Weise berechnet man:

$$
\begin{aligned}
\gamma_1 &= h_e(T_u^1) \\
\vdots \quad &\vdots \quad \vdots \\
\gamma_K &= h_e(T_u^K)
\end{aligned}
$$

Um die Übertragungsweise (Zahl der Träger des Signals OFDM) zu ermitteln, werden die Werte $\gamma_1, \cdots, \gamma_K$ verglichen und man wählt $T_u$ aus entsprechend

$$
\mathbf{t}\{\gamma_1, \cdots, \gamma_K\}, \, \max_{1 \le t \le K}
$$

## (Gleichung 4)

Um das Guard-Intervall zu ermitteln, wird, sobald man den Wert $T_u$ kennt, $\gamma_u = h_e(T_u)$ mit den Schwellwerten $U \in (U_1, \cdots, U_N), \forall N$ verglichen, wobei N die Anzahl der möglichen Guard-Intervalle ist. Diese Schwellwerte sind vorab festgesetzt, wobei dem Wert $\gamma u$ entsprochen wird, der für jedes Guard-intervall erwartet wird. So wird das Guard-Intervall (IG) bestimmt, das in der Modulation verwendet wird, das die folgende Gleichung erfüllt:

$$
IG = \mathbf{t}\{|\gamma_u - U_1|, \cdots, |\gamma_u - U_N|\}, \, \min_{1 \le t \le N}
$$

## (Gleichung 5)

Der große Vorteil des hier vorgeschlagenen, erfindungsgemäßen Verfahrens ist, dass das Signal nicht demoduliert werden muss, um die relevantesten Parameter des interessierenden Kanals zu erhalten. Wenn das Signal stark beschädigt ist aufgrund des "Mehrweg-Phänomens" und/oder aufgrund von Geräusch und die herkömmlichen Demodulatoren nicht in der Lage wären, es zu demodulieren, so ist auch in diesem Fall das erfindungsgemäße Verfahren in der Lage, die interessierende Information ohne Probleme zu erhalten.

**Tabelle 1. Parameter der Modulation des Signals DVB-T 8 MHz**

| Betriebsweise | 8K | | | | 2K | | | |
|---|---|---|---|---|---|---|---|---|
| "Guard-Intervall" | 1/4 | 1/8 | 1/16 | 1/32 | 1/4 | 1/8 | 1/16 | 1/32 |
| $T_u$ | 896 μs | | | | 224 μs | | | |
| $T_g$ | 224 μs | 112 μs | 56 μs | 28 μs | 56 μs | 28 μs | 14 μs | 7 μs |
| $T_s = T_u + T_g$ | 1120 μs | 1008 μs | 952 μs | 924 μs | 280 μs | 252 μs | 238 μs | 231 μs |

Beschreibung der Figuren

Figur 1    Ein Ausführungsbeispiel eines Spektrumbandes, das benutzt wird zur Berechnung der Kanalechos gemäß der Erfindung;

Figur 2    Blockdiagramm des Verfahrens zur Kanalabschätzung;.

200    Eingangsfilter zum Analog- /Digital-Wandler;

201    Analog-/Digital-Wandler;

202    Prozess, wobei die Frequenzantwort des Eingangssignals berechnet wird.

203    Verstümmeldung des Spektrums auf die Zone von Interesse; .

204    Berechnung des quadratischen Moduls des verstümmelten Spektrums;

205    Berechnung der IFFT.

206    Prozess der Identifikation der Strahlen und Repliken und Korrektur des Amplitudenwertes.

207    Präsentation der Antwort des erhaltenen Kanals beim Endbenutzer

Figur 3    Beispiel der Bildung des Guard-Intervalls eines OFDM-Symbols

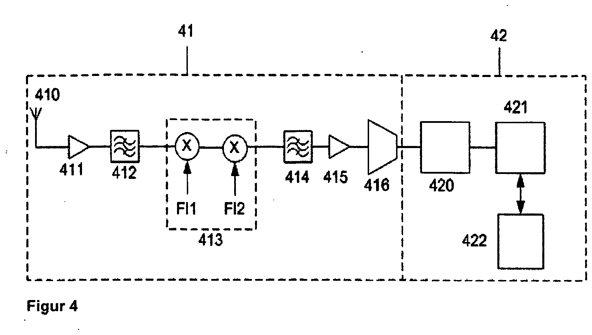

Figur 4    Referenzschaltung

41    Analogteil der Schaltung;

42    Digitalteil der Schaltung;

410 Antenne.

411 Vorverstärkung des Signals.

412 Bandpassfilter

413 Umwandlung auf Zwischenfrequenz des Kanals von Interesse

414 Bandpassfilter.

415 Automatische Verstärkungsregulierung (CAGbzw. AGC).

416 Analog-/Digitalwandler.

420 FPGA.

421 Mikroprozessor für allgemeinen Ansatz.

422 Benutzerschnittstelle.

Beschreibung einer bevorzugten Ausführunasform der Erfindung

Im Folgenden wird eine bevorzugte Ausgestaltung der Erfindung ohne irgendeine Einschränkung weder hinsichtlich der Anwendung noch hinsichtlich des Implementierungsverfahrens beschrieben, wobei das beschriebene Beispiel auch dazu dient, die Eigenschaften und die Vorteile der vorliegenden Erfindung zu erläutern.

Derzeit ist es - aufgrund des großen Fortschritts der programmierbaren digitalen Systeme - immer einfacher, komplexe Algorithmen der Signalbearbeitung in Systemen hoher Geschwindigkeit in Echtzeit anzuwenden. Die FPGA (Field Programmable Gate Array) sind programmierbare Komponenten, die häufig für solche Aufgaben aufgrund ihrer Vielseitigkeit in Bezug auf die Gestaltungsmöglichkeiten verwendet werden.

Figur 4 zeigt ein Blockschaltbild der Referenz-Implementierung.

Das Signal wird von der Antenne 410 empfangen und von dem geräuscharmen Verstärker 411 verstärkt. Das Bandpassfilter 412 filtert das interessierende Frequenzband heraus. Der Block 413 hat die Aufgabe, den zu analysierenden Kanal auf die interessierende Zwischenfrequenz (FI) umzusetzen. Das Bandpassfilter 414 ist auf FI zentriert und filtert den interessierenden Kanal aus, um benachbarte Kanäle zu eliminieren. Die Automatische-Verstärker-Regelungschaltung (Automatic Gain Control AGC) 415 ,justiert den Pegel des Signals in die Zwischenfrequenz FI, damit der Analog / Digital-Wandler 416 das Signal in das entsprechende Digitalformat wandelt. Die FPGA-Block 420 wendet den Algorithmus, wie oben beschrieben, auf die Eingangsabtastwerte an, um einerseits die Parameter der verwendeten Modulation ($T_u$, $T_g$, N,IG,BW) zu identifizieren, wobei gilt:

- $T_u$ ist die Dauer des Symbols ohne Guard-Intervall;

- $T_g$ ist die Dauer des Guard-Intervalls;

- $N$ ist die Anzahl der Träger, die in der OFDM-Modulation verwendet werden;

- $IG$ ist das Gard-Intervall;

- $BW$ ist die Bandbreite des Signals.

$$\text{Außerdem berechnet der Block 420 } h_e(t)$$

$$\text{(Gleichung 3)}$$

Sobald die Modulationsparameter und $h_e(t)$ erhalten sind, werden die Daten dem Prozessor (für allgemeinen Einsatz) 421 übermittelt, damit dieser die Position und den Pegel der Strahlen des verwendeten Kanals bestimmt, wobei das oben beschriebene Verfahren angewendet wird, wobei Strahlen und Repliken entsprechend klassifiziert werden. Schließlich wird dem Benutzer über die Schnittstelle 422 die Kanal-Schätzungsgrafik sowie die Information über die Kanalmodulation präsentiert.

Der große Vorteil dieses Verfahrens besteht darin, dass das Signal nicht zu demodulieren ist, um die relevante Kanalinformation zu erhalten. Ebenso ist kein Typus von Pilot erforderlich.

Die Erfindung betrifft auch ein System zum Schätzen von Echos, mit einem Prozessor 421, dem ein Softwareprogramm zugeordnet ist, das die vorstehend beschriebenen Rechenoperationen des erfindungsgemäßen Verfahren durchführt.

**Patentansprüche**

1. Verfahren zum Schätzen von Echos eines Kommunikationskanals, unter Verwendung eines digitalen Signals, **dadurch gekennzeichnet,**
dass das verwendete Signal ein auf eine Zwischenfrequenz umgesetztes, nicht-demoduliertes Signal ist, und
dass das Verfahren die folgenden Schritte aufweist:

   - Berechnen des Spektrums des Signals von Interesse;
   - Berechnen des quadratischen Moduls des flachen Teils der Frequenzantwort des digitalen Signals;
   - Bilden der inversen Fouriertransformierten (IFFT) des quadratischen Moduls der Frequenzantwort, und
   - Klassifizieren von Strahlen und Repliken entsprechend einem iterativen Algorithmus.

2. Verfahren nach Anspruch 1, **dadurch gekennzeichnet, dass**

   - anstelle des Bildens der inversen Fouriertransformierten (IFFT) die Fourier-Transformierte (FFT) gebildet wird.

3. Verfahren nach einem der vorstehenden Ansprüche, **dadurch gekennzeichnet, dass**

   - anstelle des Berechnens des quadratischen Moduls des flachen Teils der Frequenzantwort des digitalen Signals das Modul des flachen Teils der Frequenzantwort des digitalen Signals berechnet wird.

4. Verfahren nach einem der vorstehenden Ansprüche, **dadurch gekennzeichnet, dass**

   - die durchgeführte Schätzung der Kanalechos verwendet wird, um Maxima in den Positionen aller möglichen Zeiträume von Symbolen (OFDM) auf der Basis von Orthogonal Frequency Division Basis Multiplexing zu erfassen.

5. Verfahren nach Anspruch 4, **dadurch gekennzeichnet, dass**

   - die tatsächliche Dauer eines Symbols (OFDM) als diejenige Position erhalten wird, bei der der Maximalwert der durchgeführten Kanalschätzung am größten ist.

**6.** Verfahren nach einem der vorstehenden Ansprüche, **dadurch gekennzeichnet, dass**

- zur Bestimmung eines Zeitintervalls (IG) zur Zusammenfügung von Nachrichtenteilen Entscheidungs-Schwellwerte verwendet werden in Abhängigkeit des Pegels der geschätzten Echos in der Position, die der Dauer des Symbols (OFDM) entspricht.

**7.** Verfahren nach Anspruch 5, **dadurch gekennzeichnet, dass**

- eine Schätzung der Bandbreite und der Anzahl von Trägern in Abhängigkeit der berechneten Länge des Symbols (OFDM) erfolgt.

**8.** Verfahren nach einem der vorstehenden Ansprüche, **dadurch gekennzeichnet, dass**

- das verwendete Signal ein Signal entsprechend dem Standard DVB-T oder DVB-T2 ist.

**9.** System zum Durchführen des Verfahrens nach einem der vorhergehenden Ansprüche, **dadurch gekennzeichnet, dass**

- es einen Prozessor (421) aufweist, der die Rechenoperationen des Verfahrens durchführt.

**Claims**

**1.** A method for estimating echoes in a communication channel using a digital signal, **characterized in that**

- the signal used is converted to an intermediate frequency, non-demodulated signal, and
- that the method comprises the following steps:

    - the spectrum of the signal of interest is calculated;
    - the quadratic module of the flat part of the frequency response of the digital signal is calculated;
    - the Inverse Fourier Transform (IFFT) of the quadratic module of the frequency response is performed and
    - rays and replicas according to an iterative algorithm are classified.

**2.** A method according to claim 1, **characterized in that**

- instead of performing the inverse Fourier transform (IFFT), the Fourier transform (FFT) is performed.

**3.** A method according to any one of the preceding claims, **characterized in that**

- the module of the flat part of the frequency response of the digital signal is calculated instead of calculating the quadratic module of the flat part of the frequency response of the digital signal.

**4.** A method according to any one of the preceding claims, **characterized in that**

- the performed estimation of the channel echoes is used to detect maximums in the positions of all possible time periods of symbols (OFDM) on the basis of Orthogonal Frequency Division Multiplexing.

**5.** A method according to claim 4, **characterized in that**

- the actual duration of a symbol (OFDM) is obtained as the position at which the maximum value of the performed channel estimation is the largest.

**6.** A method according to any one of the preceding claims, **characterized in that**

- to determine a time interval (IG) for assembling message parts, decision thresholds are used depending on the level of the estimated echoes in the position corresponding to the duration of the symbol (OFDM).

**7.** A method according to claim 5, **characterized in that**

- the estimation of the bandwidth and the number of carriers depending on the calculated length of the symbol (OFDM) is performed.

8. A method according to any one of the preceding claims, **characterized in that**

- the signal used is a signal according to the standard DVB-T or DVB-T2.

9. System for carrying out the method according to any of the preceding claims, **characterized in that**

- it has a processor (421), which performs the arithmetic operations of the method.

**Revendications**

1. Procédure d'estimation d'échos dans un canal de communication utilisant un signal numérique, **caractérisé en ce que**

- le signal utilisé est converti en une fréquence intermédiaire, un signal non démodulé, et
- la méthode comprend les étapes suivantes:

- le spectre du signal d'intérêt est calculé;
- le module quadratique de la partie plane de la réponse en fréquence du signal numérique est calculé;
- la transformée de Fourier inverse (IFFT) du module quadratique de la réponse en fréquence est effectuée et
- les rayons et les répliques selon un algorithme itératif sont classés.

2. Procédure selon la revendication 1, **caractérisé en ce que**

- au lieu d'effectuer la transformée de Fourier inverse (IFFT), la transformée de Fourier (FFT) est effectuée.

3. Procédure selon l'une quelconque des revendications précédentes, **caractérisé en ce que**

- le module de la partie plane de la réponse en fréquence du signal numérique est calculé au lieu de calculer le module quadratique de la partie plane de la réponse en fréquence du signal numérique.

4. Procédure selon l'une quelconque des revendications précédentes, **caractérisé en ce que**

- l'estimation effectuée des échos de canal est utilisée pour détecter les maximums dans les positions de toutes les périodes de temps possibles des symboles (OFDM) sur la base du multiplexage par répartition en fréquences orthogonales.

5. Procédé selon la revendication 4, **caractérisé en ce que**

- la durée réelle d'un symbole (OFDM) est obtenue comme la position à laquelle la valeur maximale de l'estimation de canal effectuée est la plus grande.

6. Procédure selon l'une quelconque des revendications précédentes, **caractérisé en ce que**

- pour déterminer un intervalle temporel (IG) pour assembler des parties du message, des seuils de décision sont utilisés en fonction du niveau des échos estimés dans la position correspondant à la durée du symbole (OFDM).

7. Procédure selon la revendication 5, **caractérisé en ce que**

- l'estimation de la bande passante et du nombre de porteuses en fonction de la longueur calculée du symbole (OFDM) est effectuée.

8. Procédure selon l'une quelconque des revendications précédentes, **caractérisé en ce que**

- le signal utilisé est un signal conforme au standard DVB-T ou DVB-T2.

9.  Système de mise en oeuvre de la procédure selon l'une quelconque des revendications précédentes, **caractérisé en ce que**

- il inclut un processeur (421) qui efectúe les opérations arithmétiques de la méthode.

**Figur 1**

**Figur 2**

**Figur 3**

41                                                        42

410

411   412      FI1   FI2      414   415   416   420   421

413                                                    422

**Figur 4**

EP 2 328 311 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2009239345 A
- ES 2247916 A1
- EP 2034685 A1